# EUROPEAN PATENT APPLICATION

(11) **EP 4 342 615 A1**
(43) Date of publication of application: **27.03.2024**
(21) Application number: 21940034.8
(22) Date of filing: 17.05.2021
(51) Int. Cl.: B23K 9/16, B23K 9/095, G05D 7/06

(54) **SYSTEM AND DEVICE FOR THE ELECTRONIC REGULATION OF THE FLOW OF PROTECTIVE GAS IN WELDING EQUIPMENT WITH CONNECTIVITY INTERFACE**

(71) Applicant: Powermig Automação E Soldagem Ltda, CEP: 95032-471 Caxias do Sul - RS (BR)
(72) Inventor: FOCHESATTO, Juarez, 95032-140 Caxias do Sul (BR)
(74) Representative: Pereira da Cruz, Joao
(86) International application number: PCT/BR2021/050204
(87) International publication number: WO 2022/241526

(57) **Abstract**

The electronic regulating system for protective gas flow applied to welding equipment with connectivity interface, the subject of this invention, comprises regulating equipment (100) for gas flow equipped with a system that monitors parameter data in real-time. These parameters include open arc time, utilized gas flow, gas volume, electric current, electric voltage, wire feed speed, and total accumulated wire. The monitoring, process control, data storage, and production tracking are performed entirely online. The regulating equipment (100) consists of an electronic board (10) for data processing and a set of sensors that read the relevant process variables, sending signals to the equipment's process microcontroller.

## Description

### FIELD OF THE INVENTION

The present invention describes an electronic regulating system for protective gas flow applied to welding equipment with connectivity interface. More specifically, it comprises a gas flow regulator equipped with a system that monitors parameter data such as open arc time, gas flow, gas volume, electric current, electric voltage, wire feed speed, and total accumulated wire, in real-time. This allows for the online monitoring, process control, data storage, and production data tracking.

The regulating equipment consists of an electronic board for data processing and a set of sensors that read the relevant process variables and send signals to the equipment's process microcontroller. The process microcontroller is responsible for reading all variables and, through specific software, collaborates with the proportional valve to control the gas flow behavior.

In addition to gas control, the technology also monitors process variables, compiles the information internally, and sends it via Wi-Fi (both through the user's network infrastructure and 3G router modules) to a server. The information is stored in a database and displayed on the equipment portal. Process variables are acquired through various sensors installed in the equipment: electric current is obtained through a current sensor; electric voltage is acquired through extra hardware developed exclusively for this application; gas flow is acquired by a gas flow sensor located inside the equipment, and wire speed and weight are obtained through the wire sensor (a device that, through pulse counting, calculates the wire's weight and deposition speed) .

This new construction applied to the equipment improves the control and monitoring system through a connectivity interface that allows better integration of information for the user, generating written and visual information about the equipment's productive data.

The equipment also features an integrated monitoring system for the following process variables: electric voltage, electric current, gas flow, and wire speed. This system monitors the mentioned variables within a specified range and triggers an error alert if the variables exceed the pre-configured limits.

### BACKGROUND OF THE INVENTION

The protective gases used in welding processes primarily serve to shield the molten pool by expelling atmospheric gases from the welding region, especially Oxygen, Nitrogen, and Hydrogen, which are detrimental to the welding process. Additionally, protective gases have functions related to weldability, penetration, and a minor role in the chemical composition of the molten pool when active gases are employed in welding.

The protective gas is injected throughout the welding process at a pre-regulated flow rate through the nozzle of the welding gun or torch. The flow of the protective gas is regulated by the flowmeter and the pressure regulator-reducer. These components enable a constant supply of gas to the gun nozzle at a pre-set flow rate.

In gas-shielded welding processes, it is necessary to verify the optimal gas output adjustment for reliable welding. It is important to check for excess or absence of gas, as these factors can compromise the quality of metal fusion. Furthermore, it becomes necessary to control and regulate the flow of protective gases to reduce costs in welding processes.

Welding processes are highly wasteful when it comes to determining protective gas flow rates. The cost of protective gas is one of the most expensive elements in any welding process, making it challenging for welders to set flows higher than necessary or recommended. Most equipment manufacturers offer devices or flow control accessories that allow setting a maximum limit so that excessive flow rates cannot be used.

Most flow control equipment used with protective gases, whether from a cylinder or bulk system, is designed to operate at a nominal input pressure between about 20 and 30 PSIG. Applications using pure carbon dioxide can operate at pressures up to 50 PSIG. This means that whenever the welding torch is activated, there is an initial pressure of 20 to 30 or 50 PSIG at the welding nozzle. This high static pressure causes a large amount of gas to be released through the nozzle when the torch trigger is pulled.

To provide a more quantitative understanding, consider the following: 1) the welding process requires 35 SCFH of argon; 2) the installed flowmeter connected to the welding machine has a calibration pressure of 20 PSIG. With these settings and a standard gas diffuser, the initial flow rates can easily reach or even exceed 180 SCFH of argon. Although the flow rate decreases rapidly as the line pressure drops due to atmospheric conditions, this still represents a flow rate 5 times higher than needed for the welding process. This occurs every time the trigger is pulled. In some applications, the trigger is pulled 200 to 300 times per hour, exponentially increasing the amount of wasted gas.

Thus, the present inventor, aiming to improve gas flow control and monitoring of this information, has developed regulating equipment that monitors all parameter data in real-time through an online platform. This allows for greater savings and enhances user control and monitoring of information.

In a survey conducted in the prior art, several gas flow control devices applied to welding processes were identified. Notable among these are the following documents:
Document BR202016018807-0 (2016) from the same applicant describes a welding gas-saving system for MIG/MAG/TIG welding. It employs a current sensor (shunt) to monitor the current being used, sending this data to a software processing system (microcontroller). The microcontroller then releases gas through a linear-acting valve based on the measured welding current. The gas flow confirmation is conducted by a flow sensor to ensure precise flow.

Document BR202017013816-5 (2017) from the same applicant details a welding gas-saving system for MIG/MAG/TIG welding. It verifies and controls the gas flow by identifying the solenoid valve opening of the welding machine, according to the flow predetermined by the customer. This maintains a constant flow to mitigate any peaks or fluctuations in gas supply. Consequently, the user precisely determines the flow for each process, resulting in an average saving of 50% and eliminating the challenge of measuring gas flow with the regulator in operation.

These prior art documents from the same applicant describe a device that controls welding gas by instantly reading gas flow, network pressure, and welding current. The system can compute the volume of gas used in the process and detect gas leaks and shortages. The present inventor made constructive modifications to the equipment and control system, enhancing the connectivity interface. The equipment now sends process data to a server, where it is stored in a database and exposed through a portal. The data is stored in different database formats (CompactDB, LocalDB, or SQL). Once stored, the portal is responsible for displaying the data.

It is also possible to export the data in .XLSX, SQL, or MQTT formats, improving the control and monitoring of equipment operating parameters to enhance the gas flow regulation system in welding processes.

Therefore, the present invention is directed to an electronic regulating system for protective gas flow applied to welding equipment with connectivity interface. It comprises a gas flow regulator with a system that monitors parameter data, such as open arc time, gas flow, gas volume, electric current, electric voltage, wire feed speed, and total accumulated wire, in real-time. This enables online monitoring, process control, data storage, and production data tracking. The regulating equipment consists of an electronic board for data processing and a set of sensors that read the relevant process variables, sending signals to the equipment's process microcontroller. The microcontroller, with specific software, collaborates with the proportional valve to control the gas flow behavior, allowing the user to set the desired flow. This new construction improves the control and monitoring system through a connectivity interface, providing better integration of information for the user and generating written and visual information about the equipment's productive data.

### SUMMARY OF THE INVENTION

The present invention features an electronic regulating system for protective gas flow applied to welding equipment with connectivity interface. The equipment is equipped with an entry point, an exit point, and a Wi-Fi antenna for connection to an external server, internally comprising an electronic board with a Wi-Fi microcontroller and an antenna.

This invention includes a board composed of a pressure sensor linked to the exit point, a proportional valve located near the entry point, a gas flow sensor in the gas passage line, and an electrical connection point for the electric current sensor.

Additionally, the invention incorporates a microcontroller that reads various variables, utilizing embedded software to collaborate with the proportional valve near the entry point, controlling the behavior of the gas flow.

The equipment features a display with a set of buttons, allowing the user to define gas flow and necessary parameters, along with an indicator.

Moreover, the equipment has entry points for electrical power supply and an automation interface enabling communication with external devices.

The system enables online monitoring, control, and storage of the welding process, as well as the tracking of production data through an external server connected to a user interface.

Optionally, the equipment may present an automation interface linked to an entry point that connects to an additional board. This board is overlaid and fitted onto the main board to manage the wire sensor and voltage sensor.

The invention incorporates a wire sensor that calculates wire weight and deposition speed through pulse counting during the welding process.

Furthermore, the equipment performs online process monitoring and control and stores and tracks production data through the electronic board, facilitating data exchange between the external server and the equipment.

### BRIEF DESCRIPTION OF THE FIGURES

Figure 1 illustrates the rear view of the gas regulating equipment, detailing its internal construction. Figure 1A presents the front view of the equipment, providing details on its construction and the arrangement of external components. Figure 1B showcases the rear view of the gas regulating equipment, detailing the entry point of the automation interface and its positioning on the board.
Figure 2 illustrates the installation system of the regulating equipment in conjunction with the welding process.
Figure 3 illustrates the network topology for the installation of the regulating equipment.
Figure 4 illustrates consumption data and the overall dashboard of the company.
Figure 5 illustrates a dashboard divided by sectors.
Figure 6 illustrates the tab where adjustments to equipment parameters are made.
Figure 7 illustrates the tab containing the records registered by the equipment.
Figure 8 provides a representation of the sensors connected to the equipment used for data acquisition.
Figure 9 provides a perspective view of the wire sensor, detailing its construction.

### DESCRIPTION OF THE INVENTION

The electronic regulating system for protective gas flow applied to welding equipment with connectivity interface, the subject of the present invention, comprises regulating equipment (100) connected to a welding system and linked to a server through a connectivity interface. This system allows for online monitoring, control, and storage of the welding process, as well as the tracking of production data.

The regulating equipment (100) is equipped with an entry point (101), an exit point (102), and a Wi-Fi antenna (103) enabling connection to the external server.

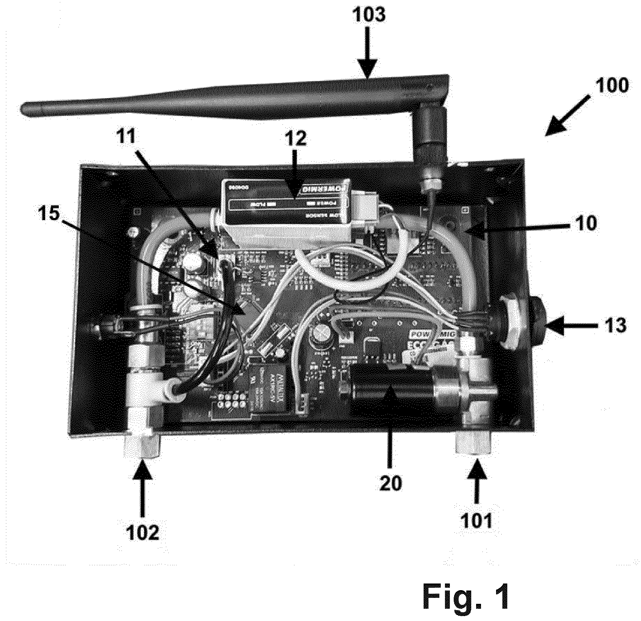

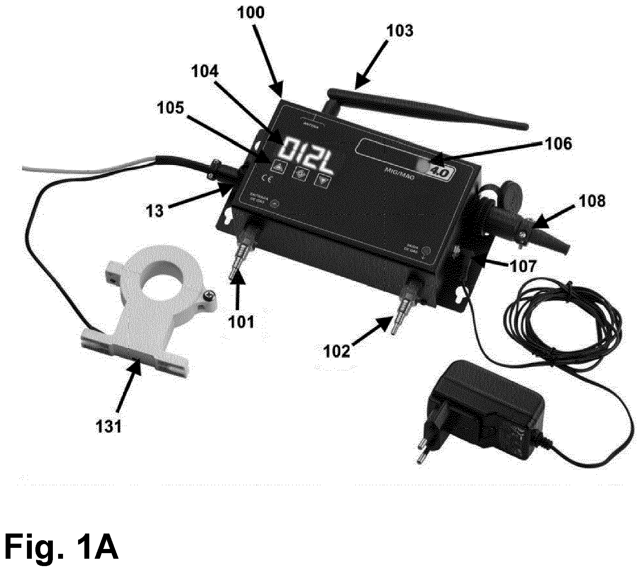

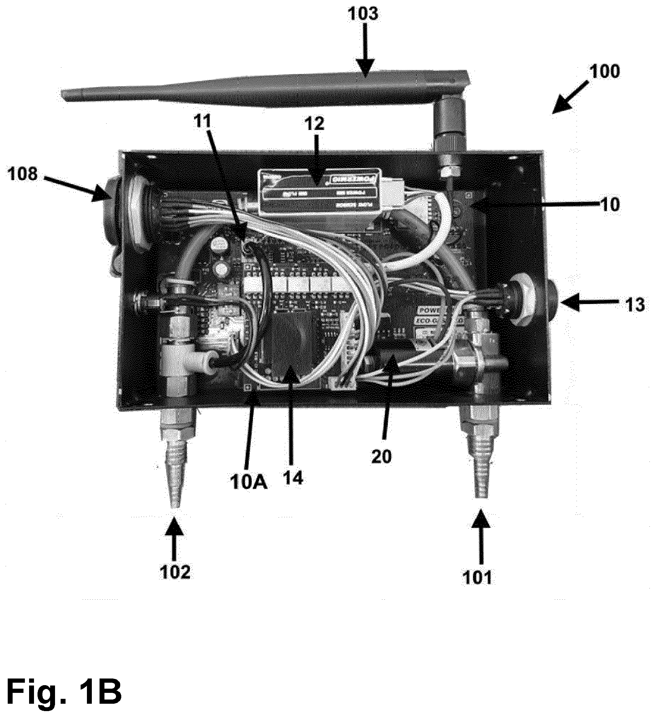

Internally, the equipment (100) features an electronic board (10) with a Wi-Fi microcontroller that, together with the antenna (103), facilitates information exchange with the external server. This board (10) includes a pressure sensor (11) linked to the exit point (102), a gas flow sensor (12) positioned in the gas passage line, and an electrical connection point (13) for the electric current sensor (131) located on the external portion of the equipment. The sensors read the relevant process variables and send signals to a process microcontroller (15) on the equipment board, as shown in Figure 1.

The process microcontroller on the board (10) reads all variables, utilizing specific embedded software to collaborate with the proportional valve (20) located near the entry point (101). This control aims to manage the gas flow behavior to align with the user's preselected preferences.

The proportional valve (20) uses an electrical signal for proportional opening and closing, making it easier to achieve physical orifice opening proportional to the applied electrical signal. This reduces turbulence in the flow, ensuring greater linearity in gas flow. Consequently, the proportional valve (20) maintains a constant gas flow output.

The equipment (100) is equipped with a display (104) featuring a set of buttons (105) enabling users to set gas flow and necessary parameters, along with an indicator (106) indicating the equipment's status. Additionally, it has an entry point for electrical power supply (107) and an entry point (108) for the automation interface (14), facilitating communication with external devices, as demonstrated in Figure 1A.

Connected to the entry point (108) are the wire sensor (200) and electric voltage sensor (201), managed by the automation interface (14) on the additional board (10A). These sensors are optional in the system, and the board (10A) is overlaid on the main board (10) when it is necessary to include the entry point (108) for the wire sensor (200) and voltage sensor (201).

The wire sensor (200) has an entry point (202) and an exit point (203) for the wire, positioned alongside the robot. The sensor (200) monitors the wire quantity used based on the emitted gas flow. The sensor (200) has an electrical connection point (204) to connect with the equipment (100).

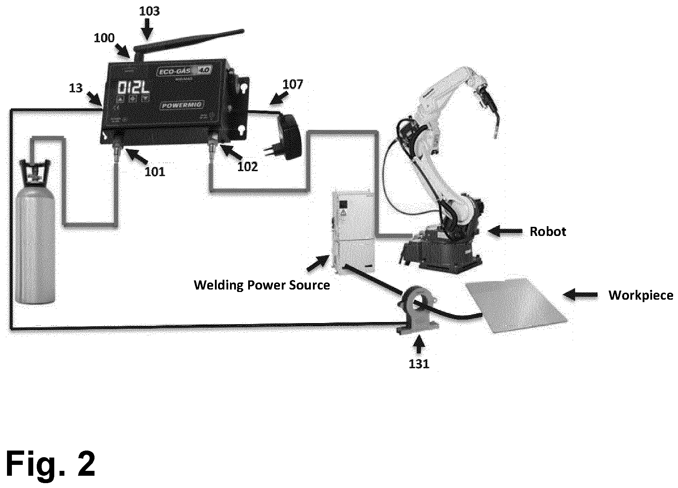

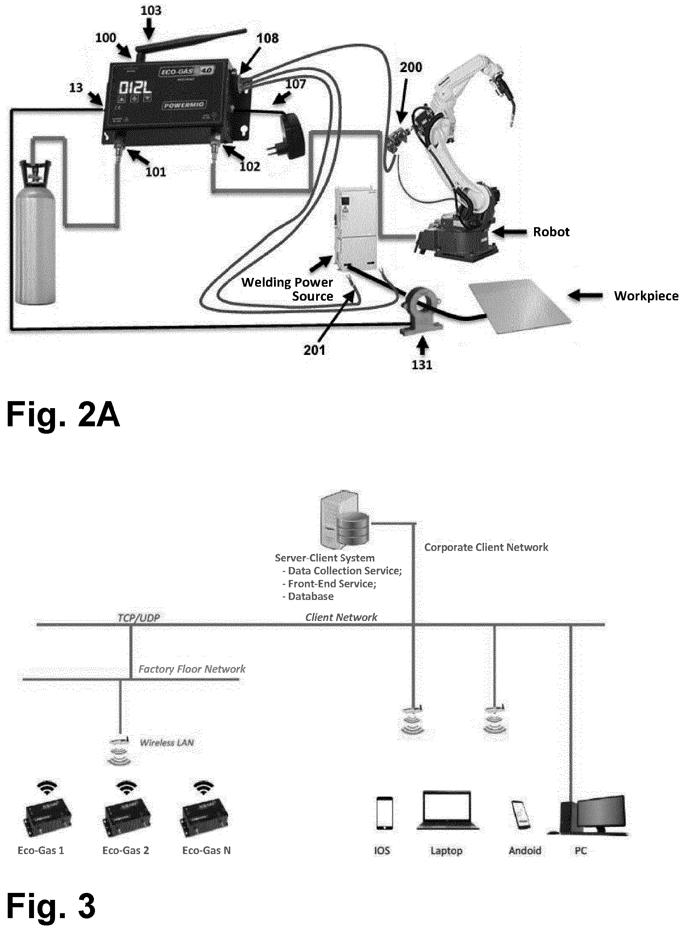

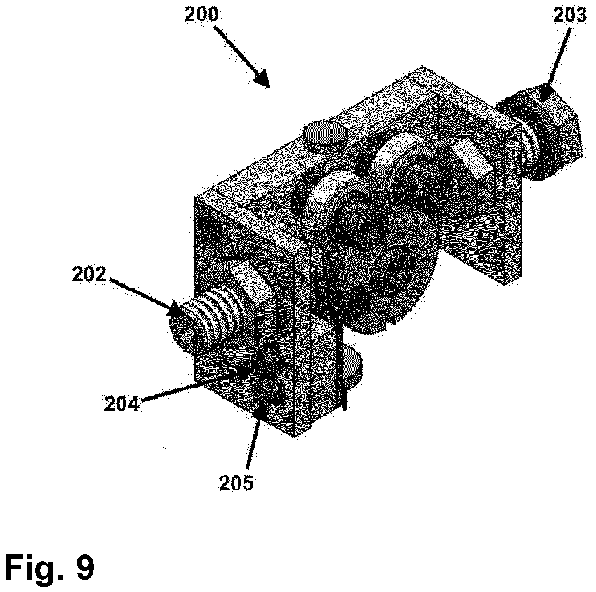

The wire sensor employs a construction technology (detailed in Figure 9) that calculates the wire's weight and deposition speed during the welding process through pulse counting. The voltage sensor measures the electric voltage during the welding process. Figure 2A exemplifies the installed system with optional items.

The equipment (100) conducts online process monitoring and control, along with storage and tracking of production data. To achieve this functionality, the electronic board (10) facilitates data exchange between the external server and the equipment.

Among the process tracking parameters, it is possible to store the following information: equipment name, cycle start and end date, cycle time, cycle flow rate, current, wire speed, wire quantity per cycle, gas/wire ratio, pressure, total cycle volume, equipment uptime, accumulated gas volume in enabled mode, accumulated gas volume in disabled mode, accumulated wire quantity, and voltage. Additionally, the parameters include equipment status, gas type, pre/post-flow, scale, and thick plate function.

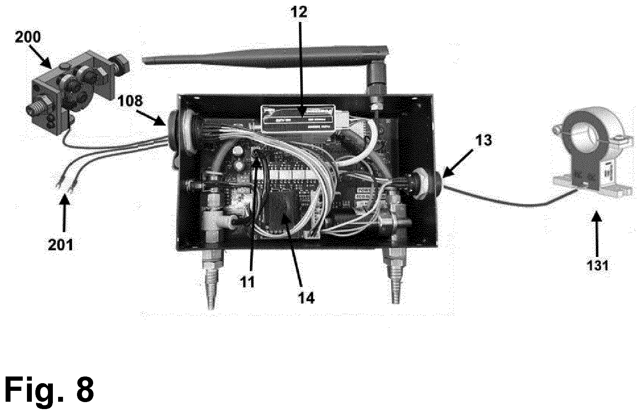

Process data is extracted from sensors installed on the equipment and is the result of data processing executed in the process algorithm, as demonstrated in Figure 8. The information is transmitted via serial communication to a Wi-Fi-enabled chip located on the board (10). The Wi-Fi chip, in turn, sends the information via Wi-Fi, using a private protocol, to a network. The information arriving at the server is stored in a database and subsequently exposed through a portal. Figure 3 illustrates the network topology where the equipment is installed and performs Wi-Fi data exchange with the server.

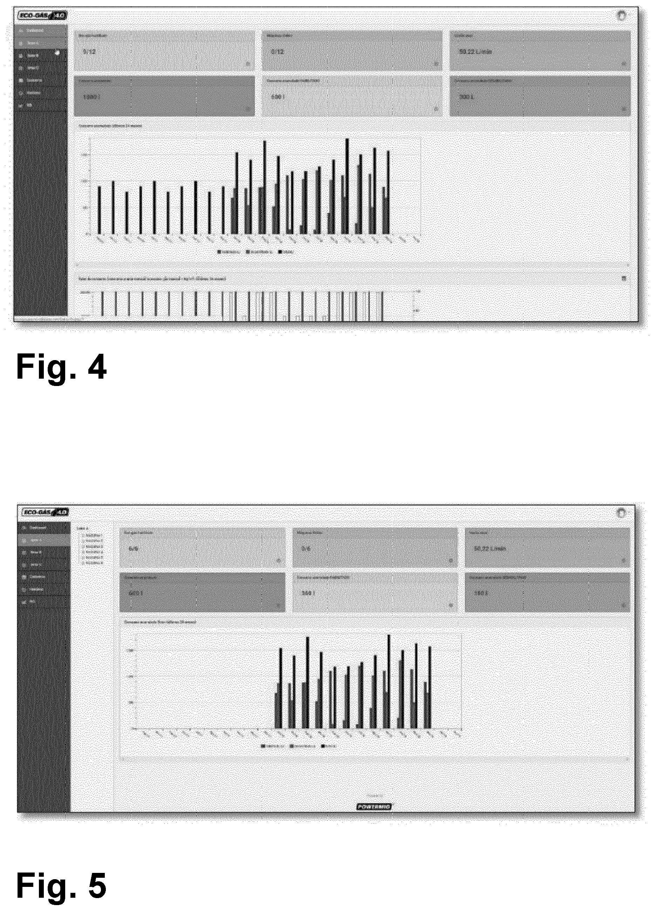

The data stored in the database is processed and displayed through a portal. The portal displays consumption graphs (monthly periods) and dashboards with real-time indications for all equipment installed in the factory. Figure 4 shows consumption data and the overall company dashboard.

The portal also has the ability to categorize installed devices into groups. Thus, generated information can be selectively exposed to different groups. Figure 5 displays the dashboard divided by sectors.

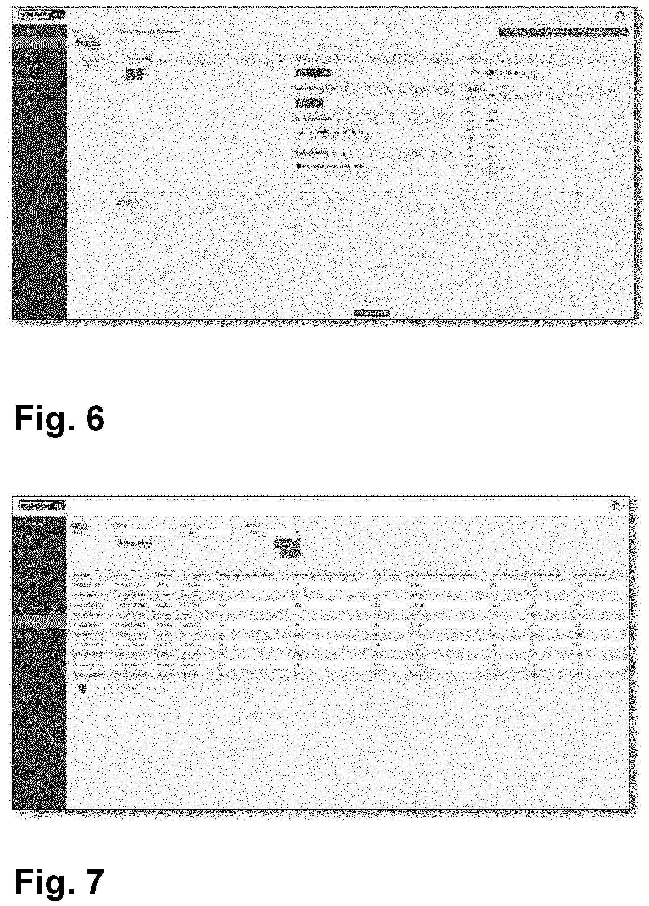

The parameters and status data of each device are shown and stored on the portal, creating a big data set of the company's welding process data. Besides monitoring, it is also possible to parameterize the equipment through the portal. Figure 6 illustrates the tab where equipment parameter changes are made.

The stored process data relates to key welding process parameters, including electric current, electric voltage, gas flow, deposition rate, and information derived from these data (such as coefficients or accumulators). The tracking occurs cycle by cycle as well as at specified time intervals, always with the possibility of device selection. Figure 7 shows the tab containing the records registered by the equipment.

## Claims

1. REGULATING EQUIPMENT **characterized by** comprising equipment (100) equipped with an entry point (101), exit point (102), and a Wi-Fi antenna (103) for connection to the external server. Internally, it includes an electronic board (10) with a Wi-Fi microcontroller that, together with the antenna (103), exchanges information with the external server. The board (10) comprises a pressure sensor (11) connected to the exit point (102), a proportional valve (20) located near the entry point (101), a gas flow sensor (12) positioned in the gas passage line, and an electrical connection point (13) for the electric current sensor (131), all interconnected to a microcontroller (15). The microcontroller reads all variables, using embedded software to work in conjunction with the proportional valve (20) located near the entry point (101) to control the gas flow behavior. The equipment (100) is equipped with a display (104) with a set of buttons (105) allowing the user to set the gas flow and necessary parameters, and an indicator (106) of equipment status. It also has an entry point for electrical power supply (107) and an entry point (108) for automation interface (14), allowing communication with external devices. The equipment (100) enables online monitoring, control, process storage, and production data tracking through an external server connected to a user interface.

2. REGULATING EQUIPMENT according to claim 1, **characterized by** the proportional valve (20) using an electrical signal to perform the function of opening and closing proportionally to the applied electrical signal. The inner orifice of the valve opens and closes in proportion to the applied electrical signal, reducing turbulence in the flow and maintaining linearity in the gas flow.

3. REGULATING EQUIPMENT according to claim 1, **characterized by** the equipment (100) optionally presenting an automation interface (14) linked to an entry point (108) that interconnects with an additional board (10A), overlaid and fitted together with the board (10), allowing the management of the wire sensor (200) and voltage sensor (201).

4. REGULATING EQUIPMENT according to claim 3, **characterized by** the voltage sensor (201) being used to measure electric voltage during the welding process.

5. REGULATING EQUIPMENT according to any of the previous claims, **characterized by** the wire sensor (200) having an entry point (202) and an exit point (203) for the wire positioned near the robot. The sensor (200) monitors the wire quantity used according to the emitted gas flow. The sensor (200) has an electrical connection point (204) to connect to the equipment (100).

6. REGULATING EQUIPMENT according to claim 5, **characterized by** the wire sensor (200) calculating the weight and deposition speed of the wire used during the welding process through pulse counting.

7. SYSTEM **characterized by** the equipment (100) performing online process monitoring and control, and storage and tracking of production data through the electronic board (10), which facilitates data exchange between the external server and the equipment. The system details the following steps:
• The system stores information such as equipment name, cycle start and end date, cycle time, cycle flow rate, current, wire speed, wire quantity per cycle, gas/wire ratio, pressure, total cycle volume, equipment uptime, accumulated gas volume in enabled mode, accumulated gas volume in disabled mode, accumulated wire quantity, and voltage. Parameters include equipment status, gas type, pre/post-flow, scale, and thick plate function.
• Process data is extracted from sensors installed on the equipment and results from data processing executed in the process algorithm.
• Information is sent via serial communication to a Wi-Fi-enabled chip located on the board (10). The Wi-Fi chip then sends the information via Wi-Fi, using a private protocol, to a network.
• Information arriving at the server is stored in a database and later exposed through a portal.
• The portal displays consumption graphs in monthly periods and dashboards with real-time indications for all equipment installed in the factory.
• The portal categorizes installed devices into groups, allowing information to be selectively exposed to different groups.
• Parameters and status data for each device are shown and stored on the portal, generating a big data set of the company's welding process data.
• In addition to monitoring, it is possible to parameterize the equipment through the portal.
• Stored process data relates to key welding process parameters, including electric current, electric voltage, gas flow, deposition rate, and information derived from these data, such as coefficients or accumulators.
• Tracking occurs cycle by cycle and at specified time intervals, always with the possibility of device selection.
